# EUROPEAN PATENT SPECIFICATION

(11) **EP 2 490 857 B1**
(45) Date of publication and mention of the grant of the patent: **14.08.2013**
(21) Application number: 10787883.7
(22) Date of filing: 22.10.2010
(51) Int. Cl.: B23Q 39/04

(54) **IMPROVED PICK-UP VERTICAL LATHE**
VERTIKALE DREHBANK MIT VERBESSERTER AUFNAHME
TOUR DE SAISIE VERTICAL PERFECTIONNÉ

(30) Priority: 23.10.2009 IT TO20090809
(43) Date of publication of application: 29.08.2012
(73) Proprietor: Siecab S.r.l., Bra (IT)
(72) Inventor: SERVETTO, Aldo, I-12042 Bra (IT)
(74) Representative: Mola, Edoardo
(86) International application number: PCT/IB2010/002710
(87) International publication number: WO 2011/048483

(56) References cited:
- EP-A1- 0 726 119
- EP-A2- 0 807 490
- EP-A2- 1 180 413

## Description

### TECHNICAL FIELD

The present invention relates to a pick-up vertical lathe with a continuous orbital motion.

A pick-up vertical lathe comprises a fixed base, a drum rotatably mounted on the base, at least one spindle and a tool-holder device for performing a material-removal operation such as a turning or a grinding, and an automatic device for loading pieces to be worked or unloading worked pieces.

### BACKGROUND ART

It is known to mount the drum on the base by means of a plurality of circumferential uprights as disclosed in patent application EP-A-1180413. However, the presence of the uprights sets limitations to the configurability of the vertical lathe as the uprights subdivide a working chamber in defined work compartments. These work compartments are angularly equally spaced so that the drum can rotate in predefined angular positions coinciding with the position of the work compartments. In particular, each work compartment is provided with at least one spindle-tool assembly and the drum moves by means of a partitioning system between predetermined and fixed angular positions while the working operation is carried out. Thereby, the drum serves exclusively the function of transporting the piece from a compartment to the other while the cut depth of the material-removal operation is defined by the radial displacement of the tool, mounted and moved on a carriage external to the drum.

The previously disclosed lathe has the further disadvantage of requiring a control device for the position of each tool mounted on the lathe during the material-removal operation.

### DISCLOSURE OF INVENTION

It is the object of the present invention to produce a pick-up vertical lathe free of the above specified drawbacks.

The object of the present invention is achieved by means of a pick-up vertical lathe according to claim 1.

### BRIEF DESCRIPTION OF THE DRAWINGS

The invention will now be described with reference to the accompanying drawings, which show non-limitative embodiments thereof, in which:
- figure 1 is a longitudinal section of a working station according to the present invention;
- figure 2 is a section taken along line II-II of figure 1;

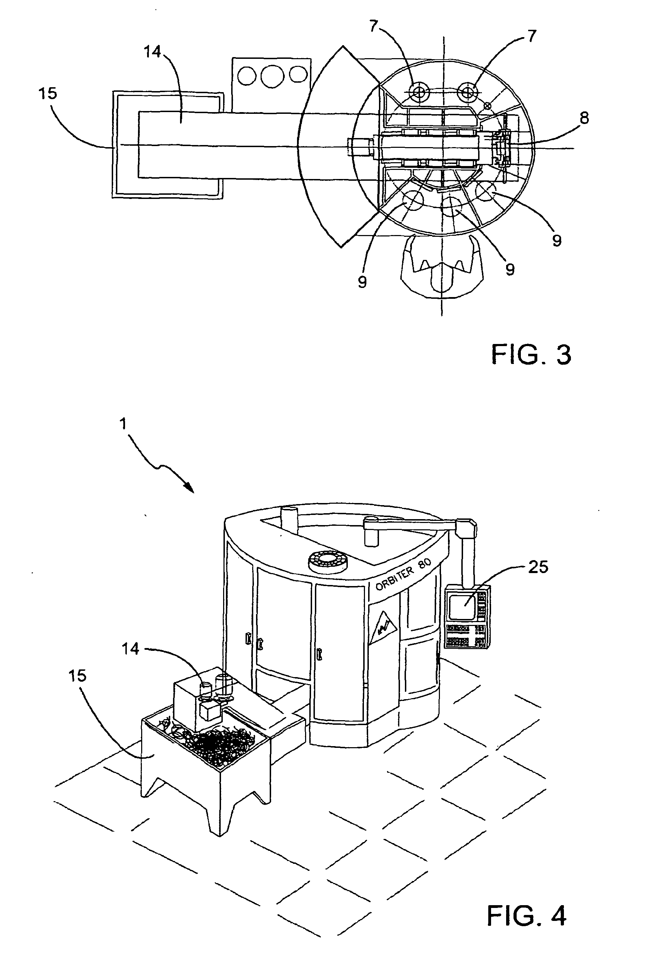

- figure 3 is a plan view of the working station of figure 1; and
- figure 4 is a perspective view of an alternative embodiment of the working station of figure 1.

### BEST MODE FOR CARRYING OUT THE INVENTION

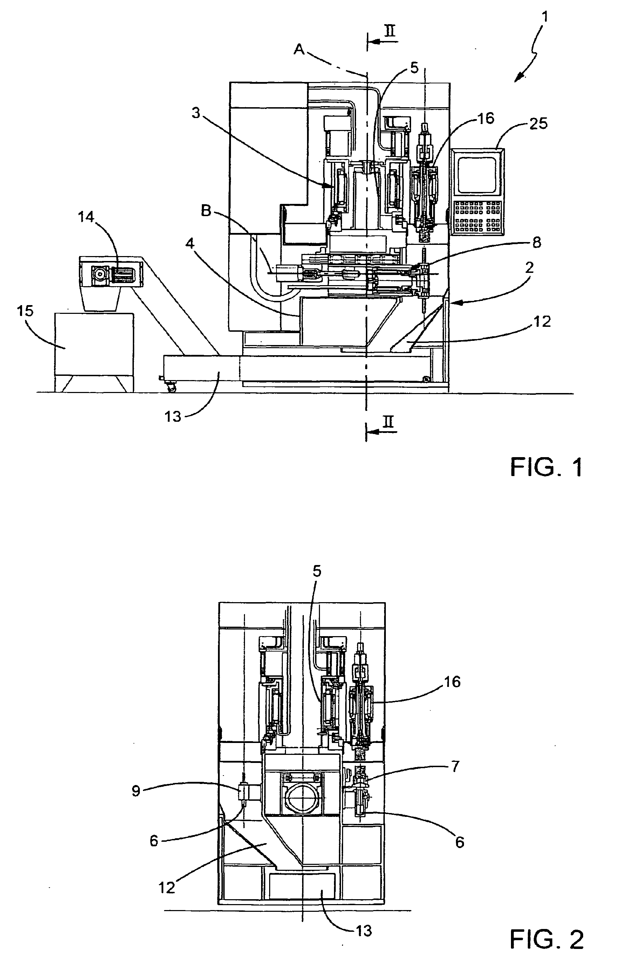

In figure 1, numeral 1 indicates a pick-up vertical lathe comprising a base 2 resting on the plane of a workshop and a drum 3 supported by base 2.

Base 2 comprises a main body 4 preferably having a parallelepipedal shape and a column 5 defining an axis A about which drum 3 rotates. In particular, if the plane of the workshop is horizontal, axis A is vertical.

Main body 4 supports a plurality of tool-holder devices 6 and at least one piece-holder platform 7. Tool-holder devices 6 may be both towers 8, which are rotatable about a transversal axis B, preferably perpendicular to axis A, and have transversal motion (axis Y) for complex operations, and heads 9 for a single tool. Each type of tool-holder device 8 is moved in a radial direction by a worm screw driving device. Furthermore, tool-holder device 6 may be configured to rotate the tool at high speeds, for example to carry out grinding or drilling operations.

The main body further defines a compartment 10 having an opening 11 facing tool-holder devices 6 and a slide 12 arranged on the opposite side of tool-holder devices 6 with respect to opening 11. Compartment 10 is also configured to house a container 13 arranged to collect the material that falls off slide 12 through opening 11 during the operation. Preferably, container 13 is provided with wheels and is extractable from compartment 10 to be unloaded and/or perform maintenance. Furthermore, container 13 may be associated to an aspirating system 14 capable of drawing metal powder and chips from the container and convey this waste to an appropriate case 15 for recovering metal waste. Preferably, each tool-holder device 6 is arranged so that the chips and other waste materials from the material-removal operation fall by gravity on slide 12 and are collected in container 13.

Above the tool-holder 6, drum 3 supports a piece-holder spindle 16 respectively rotatable about an axis thereof parallel to axis A, so as to define the cut speed of the tool on the semifinished product.

Piece-holder spindle 16 is mounted on a slide and is moved in a linear direction parallel to axis A. Each piece-holder spindle 16 comprises a locking device of the known type to clamp a piece to be worked.

During the cutting operation, the load of the tool on the semi-finished product and therefore on piece-holder spindle 16 is high and drum 3 must be accurately designed so as to ensure high precision. In particular, drum 3 is connected to column 5 by means of at least one radial bearing and is supported in a direction parallel to axis A by means of a combined radial-axial bearing mounted on main body 4 of base 2.

In particular, both the radial position and the axial position of the drum are defined by the combined bearing that comprises a roller ring with the rings having respective axes parallel to axis A and defining the radial position of drum 3.

For example, the radial-axial bearing is marketed by INA-FAG with the name YRT. Drum 3 is also connected to column 5 by means of a radial bearing, for example a ball bearing, mounted on an axial end portion of drum 3 opposite to that which is fixed to the combined bearing. Thereby, drum 3 is connected to column 5 so as to avoid the misalignment with axis A for example due to vibrations during the working operation of a semifinished product.

Furthermore, drum 3 has a bearing frame closed both in a circumferential direction and in an axial direction. In particular, the frame has a toroidal shape that defines a seat to house column 5 at least partially in an axial direction. Thereby, drum 3 has a high rigidity and a low inertia and allows fast and precise working operations.

Preferably, piece-holder platform 7 and at least one tool-holder device 6 are opposite with respect to axis A. Thereby, when one or more semifinished products are processed by means of tool-holder devices 6, a piece-holder spindle 16 is near the platform for the loading-unloading of the following/previous semifinished product. Preferably, tool-holder devices 6 are grouped in an angular space of 360° and piece-holder spindle 16 moves angularly with a continuous and controlled motion.

The control unit further comprises a transformation function that is inputted with instructions comprising depths in linear coordinates for the working operation of a piece and outputs the cylindrical coordinates that may be used for the rotation of drum 2, for the radial position of tool-holder devices 6 and for the axial portion of piece-holder spindle 16.

In particular, to perform a simple turning operation, the cut depth of the tool in a radial direction with respect to a rotation axis of piece-holder spindle 16 is defined by means of the angular position of drum 3. In order to obtain a high precision of the cut depth, drum 3 is driven by means of a torque motor controlled by means of control unit 25.

Furthermore, control unit 25 is programmed with a loading/unloading routine of the semifinished product/piece from piece-holder platform 7. In particular, the loading routine of the semifinished product provides the steps of:
- bringing piece-holder spindle 16 at piece-holder platform 7 on which the semifinished product has already been arranged;
- moving piece-holder spindle 16 towards the semifinished product;
- continuing the stroke of piece-holder spindle 16 after the first contact with the semifinished product;
- clamping the locking device and withdrawing the semifinished product.

In particular, piece-holder platform 7 is compliant downwards so as to close the axial plays with the locking device and ensure a precise coupling with piece-holder spindle 16. For example, platform 7 is connected to main body 4 by means of a slide and an elastic device maintains piece-holder platform 7 in an end-of-stroke position towards drum 3.

The advantages of the vertical lathe disclosed and shown herein are the following.

The torque motor controls the angular position of drum 3 in a precise manner to ensure the control of the cut depth of the material-removal operation. Thereby, possible devices for driving the tools in a radial direction are compact as they are loaded by shear stresses generated during the working operation in a fixed position and are moved when the cut operation is finished.

The combined bearing defines the relative position between base 2 and drum 3. Therefore, an annular working chamber is made comprising the area in which piece-holder devices 6 are mounted and the area of the piece-holder platform where the loading/unloading is performed.

Rotating drum 3 has a high automation and moves the semifinished product between an infinite number of stations identified from the angular position of tool-holder devices 6. Thereby, the lathe has a compact size.

Control unit 25 allows to load working software and working cycles written in the Cartesian coordinates. The latter are easier to write and may be adapted simply from pre-existing working cycles.

Drum 3 allows an effective handling of piece-holder spindle 16 between tool-holder devices 6. Furthermore, it is suitable for a configuration in which an operative device is a second piece-holder spindle 16 opposite to first piece-holder spindle 16 so that, while a piece-holder spindle provides a semifinished product on a tool-holder device, the other spindle cooperates with piece-holder platform 7 to unload/load the following semifinished product.

It is finally apparent that the working station disclosed and shown herein may be modified or varied without departing from the scope of protection as specified in the appended claims.

In particular, tool-holder devices 6 may either all be towers 8 or all heads 9 or any combination of the two.

Furthermore, the operative devices mounted on the positions of drum 3 may comprise a dressing head for a grinding wheel borne by tool-holder device 6. These positions may also have electronic and mechanical connections to be connected to the previously cited sensors controlled by means of control unit 25.

As well as the tool-dresser tool, other cutting tools may be mounted to perform material-removal operations on drum 3. Accordingly, at least one piece-holder spindle 16 cooperating with the cutting tools mounted on drum 3 may be mounted on base 2, so that a piece may be worked on both sides without requiring a dedicated inverting device. As a matter of fact, drum 3 is controlled precisely by means of the torque motor and may carry the piece at any tool-holder device 6 or piece-holder spindle 16.

When a piece-holder spindle 16 is mounted on base 2 and operations need to also be carried out on the side towards drum 3, the latter carries the piece above this spindle 16. Also in this case, control unit 25 continuously controls the angular progression of drum 3 while the piece rotates on piece-holder spindle 16 to carry out the material-removal operation. In particular, the continuous rotation of drum 3 generates a relative circumferential motion between the piece and the tool both in the condition in which the piece is worked on the side facing towards drum 3 and in the condition in which the piece is worked on the side towards base 2. When tool-holder devices 6 and piece-holder spindles 16 are mounted both on base 2 and on drum 3 a great number of operations and production cycles may be carried out on lathe 1 in an especially flexible manner.

## Claims

1. A vertical lathe comprising a base (2), a drum (3) rotatable about a vertical axis (A) and supported by said base (2), at least one rotating piece-holder spindle (16), a tool-holder device (6) cooperating with said spindle (16) for performing material-removal operations, at least one of said tool-holder devices (6) and spindle (16) being connected to said drum (3) in a mobile manner along a straight line, the lathe further comprising at least one operative device (16) mounted in a position of said drum (3) which is angularly spaced with respect to said tool-holder device (6) or spindle (16) mounted on said drum (3), **characterised by** comprising a torque motor driving said drum (3) and a control unit (25) which controls the angular position of said drum (3) through said torque motor such that the cut depth in a radial direction of a tool borne by said tool-holder device (6) of the material-removal operation is defined.

2. The vertical lathe according to claim 1, **characterised by** comprising a combined bearing for defining both the radial position and the axial position of said drum with respect to said base.

3. The vertical lathe according to any of the preceding claims, **characterised in that** said torque motor continuously controls the angular position of said drum (3) to define the cut depth of the material-removal operation.

4. The vertical lathe according to any of the preceding claims, **characterised by** comprising a plurality of tools borne on said drum (3).

5. The vertical lathe according to claim 4, **characterised by** comprising a second spindle borne by said base (2) and in that said at least one spindle (16) is mounted on said drum (3).

6. The vertical lathe according to any of the preceding claims, **characterised by** comprising a control unit (25) programmed to implement a coordinate transformation function which is inputted with Cartesian axes data and outputs cylindrical coordinate data.

7. The vertical lathe according to claim 6, **characterised in that** said control unit (25) is programmed so that the rotation of said drum (3) is alternate in the two directions and equal to or more than 360°C.

8. The vertical lathe according to any of the preceding claims, **characterised by** comprising a piece-holder platform (7) connected to said base (2) in a compliant manner parallelly to said axis (A).

9. The vertical lathe according to any of the preceding claims, **characterised in that** said operative device is another spindle (16) and **in that** said tool-holder device (6) is arranged so that when a spindle (16) performs a material-removal operation the other spindle (16) performs a loading/unloading operation.

10. The vertical lathe according to any of the preceding claims, **characterized in that** said base (2) comprises a column (5) and **in that** said drum (3) has a toroidal shape defining a seat to house said column (5) at least partially along said vertical axis (A).

11. A method for controlling a vertical lathe according to any of the preceding claims, **characterised by** comprising the step of rotating said drum (3) while said spindle (16) rotates to define the cut depth of the material-removal operation.

## Patentansprüche

1. Eine vertikale Drehbank mit einer Basis (2), einer Trommel (3), die um eine vertikale Achse (A) drehbar ist und von dieser Basis (2) unterstützt wird, mindestens einer drehenden Stückhalter-Spindel (16), einer Werkzeughalter-Einrichtung (6), die mit dieser Spindel (16) zur Durchführung der Materialentfernungsbetätigungen kooperiert, mindestens eine dieser Werkzeughalter-Einrichtungen (6) und Spindel (16) sind mit dieser Trommel (3) in einer bewegbaren Art und Weise entlang einer geraden Linie verbunden, wobei die Drehbank des weiteren mindestens eine Betätigungseinrichtung (16) enthält, die an einer Position von dieser Trommel (3) montiert ist, welche winkelmäßig bezüglich dieser Werkzeughalter-Einrichtung (6) oder Spindel (16), die an dieser Trommel (3) befestigt sind, winkelmäßig beabstandet ist, **gekennzeichnet durch** einen Drehmomentmotor, der diese Trommel (3) antreibt, und einer Steuereinheit (25), die eine winkelmäßige Position dieser Trommel (3) mittels dieses Drehmomentmotors derart steuert, dass die Schnitttiefe in einer radialen Richtung von einem Werkzeug, das von diesem Werkzeughalter-Einrichtung (6) dieser Materialentfernungsbetätigung erzeugt wird, festgelegt ist.

2. Die vertikale Drehmaschine nach Anspruch 1, **gekennzeichnet durch** ein kombiniertes Lager für die Festlegung sowohl der radialen Position als auch der axialen Position dieser Trommel bezüglich zu dieser Basis.

3. Die vertikale Drehmaschine nach irgendeinem der vorstehenden Ansprüche, **dadurch gekennzeichnet, dass** der Drehmomentmotor kontinuierlich die winkelmäßige Position von dieser Trommel (3) steuert, um die Schnitttiefe der Materialentfernungsoperation festzulegen.

4. Die vertikale Drehmaschine nach irgendeinem der vorstehenden Ansprüche, **gekennzeichnet durch** eine Vielzahl von Werkzeugen, die auf dieser Trommel (3) angeordnet sind.

5. Die vertikale Drehmaschine nach Anspruch 4, **gekennzeichnet durch** eine zweite Spindel, die von dieser Basis (2) gehalten wird, und dass zumindest eine Spindel (16) an dieser Trommel (3) befestigt ist.

6. Die vertikale Drehmaschine nach irgendeinem der vorstehenden Ansprüche, **gekennzeichnet durch** eine Steuereinheit (25), die programmiert ist, um eine Koordinatentransformationsfunktion zu erhalten, welche mit kartesischen Achsdaten versehen ist und welche zylindrische Koordinatendaten ausgibt.

7. Die vertikale Drehmaschine nach Anspruch 6, **dadurch gekennzeichnet, dass** die Steuereinheit (25) derart programmiert ist, dass die Rotation dieser Trommel (3) in zwei Richtungen alterniert und gleich oder größer als 360°C ist.

8. Die vertikale Drehmaschine nach irgendeinem der vorstehenden Ansprüche, **gekennzeichnet durch** eine Stückhalter-Plattform (7), die an dieser Basis (2) in einer nachgiebigen Art und Weise parallel zu dieser Achse (A) befestigt ist.

9. Die vertikale Drehmaschine nach irgendeinem der vorstehenden Ansprüche, **dadurch gekennzeichnet, dass** die Betätigungseinrichtung eine andere Spindel (16) und dass diese Werkzeughalter-Einrichtung (6) derart angeordnet ist, dass, wenn eine Spindel (16) eine Materialentfernungsoperation durchführt, die andere Spindel (16) eine Beladungs-/Entnahmeoperation durchführt.

10. Die vertikale Drehmaschine nach irgendeinem der vorstehenden Ansprüche, **dadurch gekennzeichnet, dass** die Basis (2) eine Säule (5) enthält, und dass diese Trommel (3) eine torische Form aufweist, die einen Sitz festlegt, um diese Säule (5) zumindest teilweise entlang der vertikalen Achse (A) zu haltern.

11. Ein Verfahren zur Steuerung einer vertikalen Drehmaschine gemäß irgendeinem der vorstehenden Ansprüche, **gekennzeichnet durch** den Schritt der Rotation dieser Trommel (3), während diese Spindel (16) rotiert, um die Schnitttiefe einer Materialentfernungsoperation festzulegen.

## Revendications

1. Tour vertical comprenant une base (2), un tambour (3) pouvant tourner autour d'un axe vertical (A) et soutenu par ladite base (2), au moins une broche porte-pièce (16) rotative, un dispositif porte-outil (6) coagissant avec ladite broche (16) pour la réalisation des opérations de retrait du matériau, au moins l'un dudit dispositif porte-outil (6) et de ladite broche (16) étant relié audit tambour (3) de manière mobile le long d'une ligne droite, le tour comprenant en outre au moins un dispositif opérationnel (16) monté dans une position dudit tambour (3) qui est angulairement espacé par rapport audit dispositif porte-outil (6) ou à la broche (16) montée sur ledit tambour (3), **caractérisé en ce qu'**il comprend un moteur couple entraînant ledit tambour (3) et une unité de commande (25) qui commande la position angulaire dudit tambour (3) par ledit moteur couple de sorte à définir la profondeur de coupe dans une direction radiale d'un outil porté par ledit dispositif porte-outil (6) de l'opération de retrait de matériau.

2. Tour vertical selon la revendication 1, **caractérisé en ce qu'**il comprend un support combiné pour définir à la fois la position radiale et la position axiale dudit tambour par rapport à ladite base.

3. Tour vertical selon l'une quelconque des revendications précédentes, **caractérisé en ce que** ledit moteur couple commande en continu la position angulaire dudit tambour (3) pour définir la profondeur de coupe de l'opération de retrait du matériau.

4. Tour vertical selon l'une quelconque des revendications précédentes, **caractérisé en ce qu'**il comprend une pluralité d'outils portés par ledit tambour (3).

5. Tour vertical selon la revendication 4, **caractérisé en ce qu'**il comprend une seconde broche portée par ladite base (2) et **en ce que** ladite au moins une broche (16) est montée sur ledit tambour (3).

6. Tour vertical selon l'une quelconque des revendications précédentes, **caractérisé en ce qu'**il comprend une unité de commande (25) programmée pour réaliser une fonction de transformation de coordonnées qui est saisie avec des données d'axes cartésiens et sort des données de coordonnées cylindriques.

7. Tour vertical selon la revendication 6, **caractérisé en ce que** ladite unité de commande (25) est programmée de sorte que la rotation dudit tambour (3) soit alternée dans les deux directions et soit égale ou supérieure à 360°C.

8. Tour vertical selon l'une quelconque des revendications précédentes, **caractérisé en ce qu'**il comprend une plateforme porte-pièce (7) reliée à ladite base (2) de manière conforme parallèlement audit axe (A).

9. Tour vertical selon l'une quelconque des revendications précédentes, **caractérisé en ce que** ledit dispositif opérationnel est une autre broche (16) et **en ce que** ledit dispositif porte-outil (6) est disposé de sorte que lorsqu'une broche (16) réalise une opération de retrait du matériau, l'autre broche (16) réalise une opération de chargement/déchargement.

10. Tour vertical selon l'une quelconque des revendications précédentes, **caractérisé en ce que** ladite base (2) comprend une colonne (5) et **en ce que** ledit tambour (3) présente une forme toroïdale définissant un siège pour loger ladite colonne (5) au moins en partie le long dudit axe vertical (A).

11. Procédé de commande d'un tour vertical selon l'une quelconque des revendications précédentes, **caractérisé en ce qu'**il comprend l'étape de rotation dudit tambour (3) pendant que ladite broche (16) tourne pour définir la profondeur de coupe de l'opération de retrait du matériau.
